# EUROPEAN PATENT APPLICATION

(11) **EP 1 593 932 A2**
(43) Date of publication of application: **09.11.2005**
(21) Application number: 05101727.5
(22) Date of filing: 07.03.2005
(51) Int. Cl.: G01C 9/12

(54) **Tilt sensor**

(30) Priority: 12.03.2004 JP 2004070605
(71) Applicant: OMRON CORPORATION, Kyoto-shi, Kyoto 600-8530 (JP)
(72) Inventor: NAGATA, Kenshi OMRON Corporation, Shiokoji-dori Shimogyo-ku Kyoto 600-8530 (JP)
(74) Representative: Weihs, Bruno Konrad

(57) **Abstract**

A tilt sensor includes: a rotating member in a nearly U-shape having a weight part and a magnet part; a case main body which houses the rotating member in an interior space; and a single magnetic field detecting member having a single magnetic flux detecting area on a circumference of a rotating shaft of the rotating member, wherein the case main body is tilted to relatively rotate the magnet part, and the magnetic field detecting member detects a tilt state of the case main body, wherein the rotating shaft of the rotating member is disposed at the center of the interior space of the case main body, and multiple magnet parts are independently disposed on the circumference of the rotating shaft of the rotating member. The magnet parts are formed so that both ends of the rotating member formed of a magnetic substance are polarized.

## Description

### BACKGROUND OF THE INVENTION

### Field of the Invention

The present invention relates to the structure of a tilt sensor mounted on a digital camera, for example, more specifically to a tilt sensor which can be reduced in outer dimensions and thickness as much as possible.

### Description of the Related Art

Currently, a tilt sensor is mounted on a digital camera. The tilt sensor detects its tilt state when the camera shoots horizontally and when the camera is tilted at an angle of 90 degrees in the right or left, and an image taken by the digital camera is rotated as corresponds to the detected tilt state in outputting and displaying the image by a personal computer.

In the meantime, for the structure of the tilt sensor like this, a tilt sensor described in JP-A-10-122857 below is proposed.

The tilt sensor described in JP-A-10-122857 has a case main body which has a hall IC on the back side thereof, a pendulum which has a rotating shaft on the top end part of the interior space of the case main body, and a magnet mounted on the lower part of the rotating shaft of the pendulum in which the case main body is tilted to rock the pendulum having the magnet and the hall IC is used to detect its tilt state.

### SUMMARY OF THE INVENTION

With the reduction in size of digital cameras in recent years, this tilt sensor is required to be formed in a few millimeters, for example. However, the configuration described in the JP-A-10-122857 has a limit for the reduction in size of the case main body. More specifically, the tilt sensor described in the JP-A-10-122857 has the configuration in which the rotating shaft is disposed on the top end part of the interior space in the case main body and the pendulum is hung from the rotating shaft. Thus, the pendulum rocks, and then the lower end part of the pendulum can abut against the inner wall of the case main body. Therefore, the rocking angle of the pendulum cannot be provided greatly unless the interior space of the case main body is increased. Furthermore, the configuration described above has to detect the minute displacement of the magnet corresponding to the minute rocking angle of the pendulum. However, when it tries to detect such minute displacement, it is likely to make wrong detection in the case where the case main body is slightly tilted or the case main body undergoes external vibrations or impact. On this account, the traditional tilt sensor has a problem that the rocking angle of the pendulum is provided greatly and the case main body needs to be formed greatly for improved detection accuracy.

Then, the invention has been made in view of the problem. An object is to provide a tilt sensor which reduces its case main body as much as possible and can detect a tilt state accurately even though the case main body is formed small in this manner.

More specifically, a tilt sensor according to the invention includes:
a rotating member having a weight part and a magnet part;
a case main body which houses the rotating member in an interior space; and
a single magnetic field detecting member having a single magnetic flux detecting area on a circumference of a rotating shaft of the rotating member,
wherein the case main body is tilted to relatively rotate the magnet part, and
the magnetic field detecting member detects a tilt state of the case main body,
wherein the rotating shaft of the rotating member is disposed at the center of the interior space of the case main body, and
multiple magnet parts are independently disposed on the circumference of the rotating shaft of the rotating member.

When configured in this manner, since the rotating member can be rotated without abutting the end part of the rotating member against the inner wall surface of the case main body, the angle of rotation can be surely provided greatly with no increase in the case main body. Allowing the angle of rotation to be surely provided greatly eliminates detecting the minute displacement of the magnet part with the magnetic field detecting member such as the hall IC and the hall device, and thus even a small tilt, vibrations, and impact cannot cause wrong detection. Since multiple magnet parts are independently disposed on the rotating member, any one of the magnet parts can be displaced so as to be in the single magnetic flux detecting area without tilting the case main body greatly, and the single magnetic field detecting member can surely detect a tilt state.

In the invention like this, the magnet part is preferably formed so that a part of the rotating member is polarized.

When configured in this manner, the thickness of the rotating member can be formed smaller than the case where new small magnets are separately provided and mounted on the rotating member. Since the magnet does not need to be mounted, the number of components can be reduced and fabrication process steps can be simplified.

When the magnet part is disposed, two right and left parts of the rotating member are independently polarized, and magnetic poles are varied to each other.

When configured in this manner, the different magnetic pole is detected to easily detect the tilt direction. Since the magnet parts are independently disposed right and left, the closed magnetic field area can be created in the polarized parts. Thus, the area where the magnetic field exists and the area where the magnetic field does not exist can be clearly detected distinguishably, and wrong detection can be prevented.

In addition, the rotating member is configured to have a weight part with thickness and magnet parts formed on both sides of the weight part, the magnet parts are formed relatively thinner than the weight part, and
the case main body is configured to have a weight rotating area that allows the weight part to rotate and a magnet rotating area that allows the magnet part to rotate and is formed to have a thinner bottom than a rotating area of the weight part, the magnet part is formed thin. Then, a magnetic field detecting member is configured to be buried on the back side of the case main body of the magnet rotating area formed to have a thin bottom.

When configured in this manner, the magnetic field detecting member can be buried in the space on the back side of the case main body provided by forming the magnet rotating area to have a thin bottom, and thus the thickness of the tilt sensor can be suppressed small. Since the magnetic field detecting member is buried on the magnet part rotating area, the magnet part is close to the magnetic field detecting member. Therefore, the variation in the magnetic flux based on the displacement of the magnet part can be detected accurately.

A stepped surface formed by difference in thicknesses of the weight part and the magnet part is abutted against a stepped surface formed by difference in depth dimensions of the rotating area of the weight part and the rotating area of the magnet part to define an angle of rotation of the rotating member.

When configured in this manner, the stepped surfaces formed by the difference in the thicknesses and depth dimensions can be used to define the angle of rotation of the rotating member. Thus, the angle of rotation of the rotating member can be defined by a simple configuration without separately providing a new rotation defining member. Therefore, for example, the rotating member is not rotated too much by an inertial force of the weight part, and wrong detection can be prevented.

The case main body is provided with an inner connecting terminal which connects a terminal of the magnetic field detecting member and an outer connecting terminal which is connected to the inner connecting terminal is extended from the case main body.

When configured in this manner, even though the tilt sensor is formed in a few millimeters, the outer connecting terminal can be confirmed from outside the case main body, and the tilt sensor can be easily mounted on a substrate and repaired.

The case main body is formed of a case and a cover, wherein a projection which is projected toward the interior space side of the case is disposed at the center of the cover.

When configured in this manner, the rotating member housed in the case can be prevented from coming off and wobbling. Since the projection is disposed at the center part, the contacted part is a single point even though the projection is contacted with the rotating member. Therefore, the rotating member is allowed to rotate with no great friction.

In the invention, the tilt sensor includes: the rotating member having the weight part and the magnet part; the case main body which houses the rotating member in the interior space; and the single magnetic field detecting member having the single magnetic flux detecting area on the circumference of the rotating shaft of the rotating member, wherein the case main body is tilted to relatively rotate the magnet part, and the magnetic field detecting member detects a tilt state of the case main body, wherein the rotating shaft of the rotating member is disposed at the center of the interior space of the case main body. Thus, the angle of rotation can be surely provided greatly with no increase in the case main body, and therefore even a small tilt, vibrations, and impact cannot cause wrong detection. In the invention like this, multiple magnet parts are independently disposed on the circumference of the rotating shaft of the rotating member. Thus, any one of the magnet parts can be rotationally displaced to the single magnetic flux detecting area without tilting the case main body greatly, and the single magnetic field detecting member can surely detect a tilt state.

### BRIEF DESCRIPTION OF THE DRAWINGS

The teachings of the invention can be readily understood by considering the following detailed description in conjunction with the accompanying drawings, in which:
Fig. 1 is an exploded perspective diagram illustrating a tilt sensor showing an embodiment according to the invention;
Fig. 2 is a perspective diagram illustrating the tilt sensor shown in Fig. 1 assembled;
Fig. 3 is a cross-section of A-A in Fig. 2;
Fig. 4 is a back side diagram illustrating of the tilt sensor of the embodiment;
Fig. 5 is a diagram illustrating the operating principles when a hall IC is used as a magnetic field detecting member;
Fig. 6 is a diagram illustrating the operating principles when a hall device is used as a magnetic field detecting member; and
Fig. 7 is diagrams illustrating the operating states of a tilt sensor in this form.

### DESCRIPTION OF THE PREFERRED EMBODIMENT

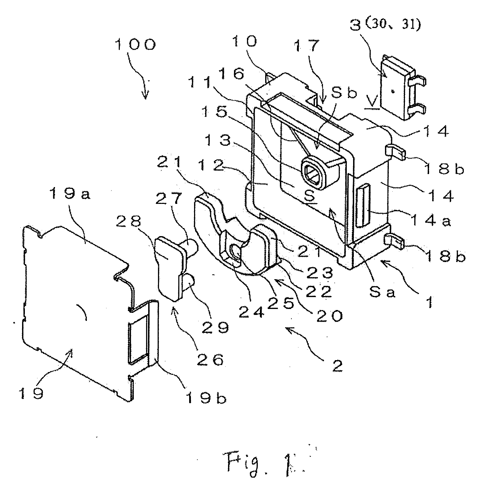

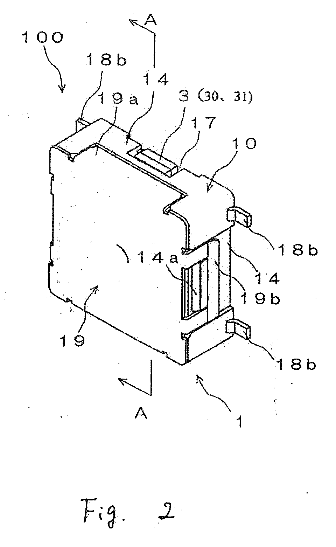

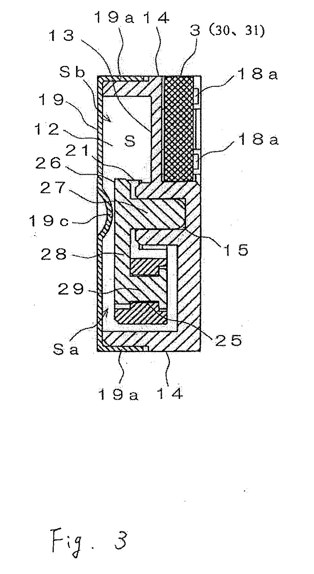

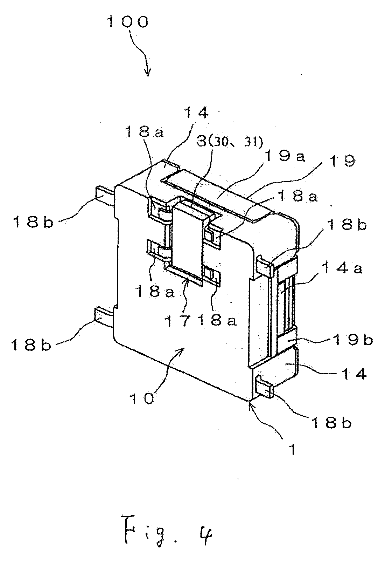

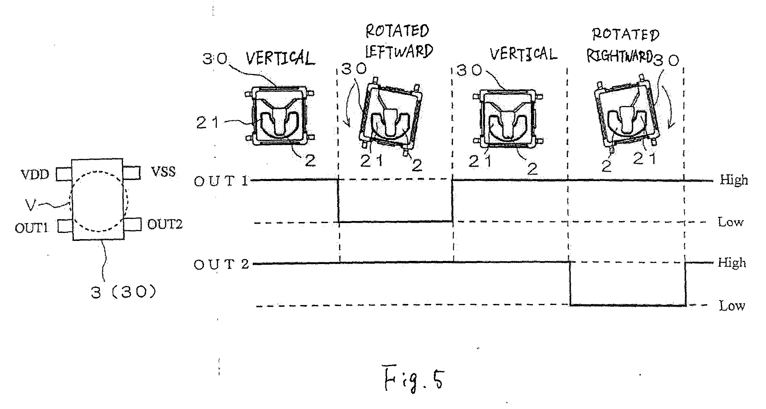

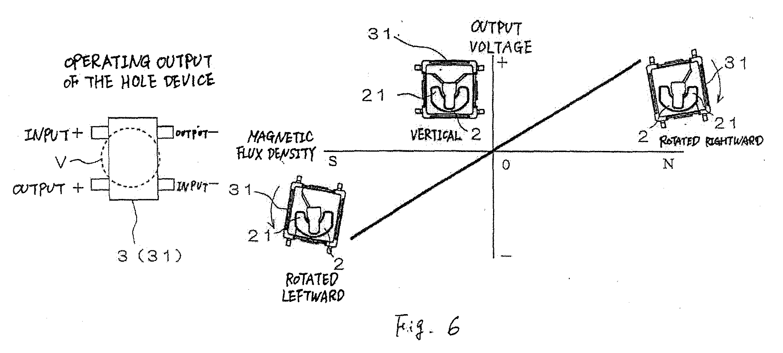

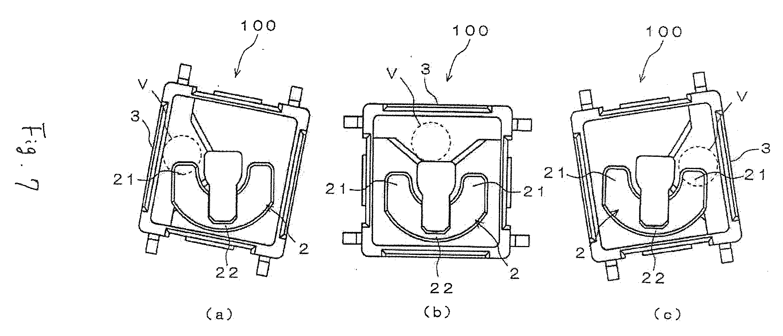

Hereinafter, an embodiment according to the invention will be described with reference to the drawings. Fig. 1 depicts an exploded perspective diagram illustrating a tilt sensor 100 of the embodiment, and Fig. 2 depicts a perspective diagram illustrating the tilt sensor 100 assembled. Fig. 3 depicts a cross-section of A-A in Fig. 2, and Fig. 4 depicts a back side diagram illustrating the tilt sensor 100. Fig. 5 depicts a diagram illustrating the operating principles when a hall IC 30 is used as a magnetic field detecting member 3, and Fig. 6 depicts a diagram illustrating the operating principles when a hall device 31 is used as a magnetic field detecting member 3. Fig. 7 depicts the operating states of the tilt sensor 100. In Fig. 7, Fig. 7A depicts the operating state where a case main body 1 is tilted rightward, Fig. 7B depicts the state where the case main body 1 is set horizontally, and Fig. 7C depicts the operating state where the case main body 1 is tilted leftward.

The tilt sensor 100 of the embodiment includes the case main body 1 mounted with a single magnetic field detecting member 3 and a rotating member 2 housed in an interior space S of the case main body 1 in which the case main body 1 is tilted to rotate the rotating member 2 as a bearing 15 disposed at the orthogonal center part of the case main body 1 is centered and the magnetic field detecting member 3 detects a magnet part 21 disposed on the rotating member 2 to detect a tilt state of the case main body 1. Hereinafter, the specific configuration of the tilt sensor 100 of the embodiment will be described in detail.

The case main body 1 is configured to have a case 10 and a cover 19, which is formed in such size that its fine configuration can be seen visually with a magnifier. For example, the depth dimension is about 2.0 mm, the vertical dimension is about 5.5 mm, and the horizontal dimension is about 5.5 mm.

The case 10 is formed in a nearly square of an LCP resin, and the bearing 15 which rotatably holds the rotating member 2 is disposed at the orthogonal center part of the interior space S. The bearing 15 is formed relatively longer in the length of the shaft hole in order to prevent the rotating member 2 from wobbling, and the inner wall of the bearing 15 is formed in the polygonal shape in the cross-section to reduce the friction with a shaft 27 of the rotating member 2.

The rotating member 2 has a rotating part 20 formed in a nearly U-shape, and a holding part 26 which holds the rotating part 20 in the bearing 15 of the case 10.

The rotating part 20 configuring the rotating member 2 is formed of a magnetic substance metal in a nearly U-shape, and a magnet part 21 is disposed on the top end parts on both right and left sides of the nearly U-shape. The magnet parts 21 are independently polarized only in the right and left top end parts, and the magnetized directions are set differently each other. In the embodiment, the magnetic pole on the back side of the left magnet part 21 in Fig. 1 is the south pole (the front side is the north pole), and the magnetic pole on the back side of the right magnet part 21 is inversely the north pole (the front side is the south pole). A weight part 22 is disposed on the lower part in the nearly U-shape. The weight part 22 is formed thicker in the thickness than the thickness of the magnet part 21, and thus the thicker part is formed relatively heavy to act as a weight. A contact surface 23 as a stepped surface formed by the difference in the thicknesses is formed on the border between the weight part 22 and the magnet part 21, and the contact surface 23 is contacted with a restraint surface 16 of the case 10, described later. Moreover, a vertical groove 24 is formed at the center part of the weight part 22, and a through hole 25 is disposed at the center part of the groove 24. The holding part 26 is fit into the groove 24 and the through hole 25 formed in the groove 24.

The holding part 26 is configured to have a shaft 27, an arm 28 and a crimping part 29. The shaft 27 is formed in a pin shape having the outside diameter that can contact with the inside of the bearing 15 of the case 10. The arm 28 is formed in a rectangular shape in a cross-section which can be fit into the groove 24 formed in the rotating part 20. The crimping part 29 is formed to have the outside diameter that can be inserted into the through hole 25. As shown in Fig. 3, it is inserted into the through hole 25, and then it is crimped and mounted by heating it from the back side. In addition, the holding part 26 is formed of an LCP resin. The reason why it is formed of an LCP resin is that when the size of the tilt sensor 100 is formed in a few millimeters, the shaft 27 of the holding part 26 also needs to be formed significantly small. For example, when the shaft 27 is formed in a metal, the metal part is likely to become brittle to break. Therefore, in the embodiment, the holding part 26 is formed of an LCP resin with relative elasticity.

The rotating member 2 thus configured is mounted on the bearing 15 of the case 10 and is allowed to rotate in the interior space S.

The interior space S is formed of an area surrounded by an inner wall surface 12, a bottom 13 and an opening 11 of the case 10 in which a weight rotating area Sa that allows the weight part 22 to rotate, the weight part is disposed on the rotating member 2, and a magnet rotating area Sb that allows the magnet part 21 to rotate are provided. In the weight rotating area Sa, the depth dimension from the opening 11 is formed greater in order to correspond to the thickness of the weight part 22. In the magnet rotating area Sb, the depth dimension from the opening 11 to the bottom 13 is formed smaller in order to correspond to the thickness of the magnet part 21. The restraint surface 16 that is the stepped surface formed by the difference in the depth dimensions is provided on the border between the weight rotating area Sa and the magnet rotating area Sb. The contact surface 23 formed in the weight part 22 of the rotating member 2 is abutted against the restraint surface 16 to define the angle of rotation of the rotating member 2. The angle of rotation is set so that the tilt sensor 100 is rotated at the maximum and then the magnet part 21 faces a magnetic flux detecting area V of the hall IC 30, and that a V-shape at an angle of about 45 degrees is formed when the case 10 is seen from the front.

In the meantime, in the space on the back side of the case which is provided by forming the magnet rotating area Sb to have a thin bottom, a burying part 17 on which the magnetic field detecting member 3 is mounted is formed. Near the burying part 17, an inner connecting terminal 18a which welds a terminal of the magnetic field detecting member 3 is formed, and an outer connecting terminal 18b which is connected to the inner connecting terminal 18a is formed as extended from the case main body 1, as shown in Fig. 4. The reason why the outer connecting terminal 18b is extended from the case 10 is that the tilt sensor 100 formed in a few millimeters is easily mounted and repaired when the tilt sensor 100 is mounted on a substrate and when the sensor mounted on the substrate is repaired. The members of the inner connecting terminal 18a and the outer connecting terminal 18b are insert molded.

The magnetic field detecting member 3 disposed on the burying part 17 is configured of the hall IC 30 or the hall device 31 shown in Fig. 5 or 6, and a component having a single magnetic flux detecting area V at the center part thereof is used. The hall IC 30 detects the magnetic flux and outputs a given signal from an OUT terminal. Moreover, the hall device 31 detects the magnetic flux and outputs electric power matching with the magnetic flux density. The operating states of the hall IC 30 and the hall device 31 will be described in Figs. 5 and 6.

First, as shown in Fig. 5, for the hall IC 30, a component having a magnetic flux detecting area V as shown in a circular broken line at the center part thereof is used, and has a VDD terminal, a VSS terminal, an OUT1 terminal, and an OUT2 terminal on the outer side thereof. When the case main body 1 is tilted leftward, the output signal of the OUT1 terminal is changed low. When the tilt sensor 100 is returned back, the output signal of the OUT1 terminal is returned back. When the tilt sensor 100 is tilted in the same direction from that position, the output signal of the OUT2 terminal is changed low. In this manner, the signal corresponding to the tilt state of the case main body 1 is outputted.

As shown in Fig. 6, for the hall device 31, a component having a magnetic flux detecting area V as shown in a circular broken line at the center part thereof is used, and has a positive input terminal, a positive output terminal, a negative input terminal, and a negative output terminal on the outer side thereof. When the case main body 1 is rotated leftward from the vertical state, a high magnetic flux density on the south pole side is detected to output negative voltage. Inversely, when the case main body 1 is rotated rightward, a high magnetic flux density on the north pole side is detected to output positive voltage. In this manner, the signal corresponding to the tilt state of the case main body 1 is outputted.

The case 10 mounted with the hall IC 30 or the hall device 31 is covered with the cover 19 over the opening 11. The cover 19 has a guide piece 19a and a stop part 19b in which the guide piece 19a is guided to an outer wall surface 14 of the case 10 and the stop part 19b is stopped and fixed to a hook 14a of the outer wall surface 14 of the case 10. As shown in Fig. 3, a projection 19c is disposed at the center of the cover 19. The projection 19c is shaped to project toward the interior space S side, and to abut against the rotating shaft (at the center axis of the shaft 27) of the rotating member 2 disposed in the interior space S with a small clearance. The projection 19c prevents the rotating member 2 from coming off as well as prevents it from wobbling in rotating. The cover 19 is formed of a non-magnetic substance metal such as phosphor bronze. The reason why it is formed of a metal is that it increases in thickness when it is formed of a resin as similar to the case 10, which cannot reduce in thickness. The reason why the non-magnetic substance is used is that when it is formed of a magnetic substance, the magnet part 21 is polarized and attached to the cover 19 and cannot rotate. Therefore, in the embodiment, the cover 19 is formed of a non-magnetic substance metal.

Next, the operating state of the tilt sensor 100 thus configured will be described.

First, as shown in Fig. 7B, when the tilt sensor 100 is set in the vertical state, the rotating member 2 is hung directly blow as the shaft 27 is a pivot. In this state, since the right and left magnet parts 21 are placed apart from the magnetic flux detecting area V, the magnetic flux from the magnet parts 21 does not reach the magnetic flux detecting area V, and the high signals are outputted from the OUT1 and OUT2 terminals as shown in Fig. 5. When the hall device 31 is used as the magnetic field detecting member 3, zero voltage is outputted as shown in Fig. 6.

When the case main body 1 is rotated leftward from this state, the rotating member 2 is rotated relatively leftward by the weight of the weight part 22 and the magnet parts 21 are close to the magnetic flux detecting area V of the magnetic field detecting member 3. When the hall IC 30 is used as the magnetic field detecting member 3, on the condition that the magnetic flux exceeding a given threshold value is detected, the low signal is outputted from the OUT1 terminal as shown in Fig. 5. When the hall device 31 is used, high negative voltage corresponding to the distance to the magnet part 21 is outputted as shown in Fig. 6.

Inversely, when the case main body 1 is retuned from the state shown in Fig. 7A to the vertical state, the magnet parts 21 are apart from the magnetic flux detecting area V. Thus, the magnetic flux below a given threshold value is detected, and the high signal is outputted from the OUT1 terminal of the hall IC 30. When the hall device 31 is used, zero voltage is outputted.

When the case main body 1 is rotated rightward from this vertical state as shown in Fig. 7C, similarly, the magnet part 21 on the right side is close to the magnetic flux detecting area V of the magnetic field detecting member 3. When the hall IC 30 is used as the magnetic field detecting member 3, on the condition that the magnetic flux exceeding a given threshold value is detected, the low signal is outputted from the OUT2 terminal. When the hall device 31 is used as the magnetic field detecting member 3, positive voltage is outputted as corresponding to the magnet part 21 coming. As the contact surface 23 of the weight part 22 is abutted against the restraint surface 16 of the case 10, the signal of the hall IC 30 and the voltage of the hall device 31 are maintained and outputted.

In this manner, according to the embodiment, the tilt sensor includes: the rotating member 2 having the weight part 22 and the magnet part 21; the case main body 1 which houses the rotating member 2 in the interior space S; and the single magnetic field detecting member 3 having the single magnetic flux detecting area V on the circumference of the rotating shaft of the rotating member 2, in which the case main body 1 is tilted to relatively rotate the magnet part 21, and the magnetic field detecting member 3 detects a tilt state of the case main body 1. Since the rotating shaft of the rotating member 2 is disposed at the center of the interior space of the case main body 1, the angle of rotation of the rotating member 2 can be surely provided greatly with no increase in the case main body 1. Accordingly, the minute displacement of the magnet part 21 does not need to be detected, and even a small tilt, impact, and vibrations cannot cause wrong detection. Since multiple magnet parts 21 are independently disposed on the rotating member 2, any one of the magnet parts 21 can be rotationally displaced to the single magnetic flux detecting area V without tilting the case main body 1 greatly, and the single hall device 30 can surely detect a tilt state.

Since the rotating member 2 is formed of a magnetic substance and the magnetic substance is polarized to provide the magnet parts 21, the thickness of the rotating member can be formed smaller than the case where new magnets are separately provided and mounted on the rotating member. Since the magnet does not need to be mounted, the number of components can be reduced and fabrication process steps can be simplified.

When the magnet parts 21 are disposed in this manner, two right and left parts of the rotating member 2 formed in a nearly U-shape are independently polarized, and the magnetic poles are varied so that the left side is the south pole and the right side is the north pole. Thus, a tilt state can be detected by a simple configuration.

The rotating member 2 has the weight part 22 with thickness and the magnet parts 21 formed on both sides of the weight part 22 right and left, the magnet parts are formed relatively thinner than the weight part 22, in which the case main body 1 has the weight rotating area Sa that allows the weight part 22 to rotate and the magnet rotating area Sb that allows the magnet part 21 to rotate and is formed to have a thinner bottom than the rotating area Sa of the weight part 22, wherein the burying part 17 in which the magnetic field detecting member 3 is buried is disposed on the back side of the case main body 1 of the magnet rotating area Sb formed to have a thin bottom. Thus, the thickness of the tilt sensor 100 can be suppressed small. Since the magnetic field detecting member 3 is buried on the magnet rotating area Sb side in this manner, the magnet parts 21 can be close to the magnetic field detecting member 3, and the variation in the magnetic flux based on the displacement of the magnet parts 21 can be detected accurately.

In addition, the contact surface 23 formed by difference in the thicknesses of the weight part 22 and the magnet part 21 is abutted against the restraint surface 16 formed by difference in the depth dimensions of the rotating area Sa of the weight part 22 and the rotating area Sb of the magnet part 21 to define the angle of rotation of the rotating member 2. Thus, the angle of rotation of the rotating member can be defined by a simple configuration without separately providing a new rotation defining member. Therefore, for example, the rotating member 2 is not rotated too much by an inertial force of the weight part 22, and wrong detection can be prevented.

In the embodiment, the inner connecting terminal 18a which connects the terminal of the hall IC 30 or the hall device 31 is disposed on the back side of the case main body 1, and the outer connecting terminal 18b connected to the inner connecting terminal 18a is extended from the case main body 1. Thus, when the tilt sensor 100 formed in a few millimeters is mounted on a substrate, it can be easily welded and repaired.

A projection which is projected toward the interior space S side of the case 10 is disposed at the center of the cover 19 forming the case main body 1, and the projection is abutted against the rotating shaft of the rotating member 2. Thus, the rotating member 2 can be prevented from coming off and wobbling. Even though the projection is contacted with the rotating member, the contacted part can be a single point. Therefore, the rotating member is allowed to rotate with no great friction.

The invention is not limited to the embodiment, which can be implemented in various forms.

For example, in the embodiment, the case main body 1 is formed in a nearly square, and the rotating shaft is disposed at the orthogonal center part thereof. However, the rotating shaft is not necessarily disposed at the orthogonal center part. It is acceptable to dispose it slightly apart from the orthogonal center part as long as the rotating member 2 is not abutted against the inner wall surface 12 of the case main body 1. In this case, in the relation of the invention, 'the center' means the position that the rotating member can rotate without abutting against the inner wall of the case.

In the embodiment, the rotating member 2 is formed in a nearly U-shape, but any shapes are acceptable such as a disk and a bar, not limited to this shape.

Moreover, in the embodiment, the rotating member 2 is polarized to provide the magnet parts 21, but not limited to this, it is acceptable that magnets are independently mounted on the rotating part.

## Claims

1. A tilt sensor comprising:
a rotating member having a weight part and a magnet part;
a case main body which houses the rotating member in an interior space; and
a single magnetic field detecting member having a single magnetic flux detecting area on a circumference of a rotating shaft of the rotating member,
wherein the case main body is tilted to relatively rotate the magnet part, and
the magnetic field detecting member detects a tilt state of the case main body,
wherein the rotating shaft of the rotating member is disposed at the center of the interior space of the case main body, and
multiple magnet parts are independently disposed on the circumference of the rotating shaft of the rotating member.

2. The tilt sensor according to claim 1, wherein the magnet part is formed so that at least a part of the rotating member is polarized.

3. The tilt sensor according to claim 1, wherein the magnet part is formed so that two right and left parts of the rotating member are independently polarized and magnetic poles are varied to each other.

4. The tilt sensor according to claim 1, wherein the rotating member has a weight part with thickness and magnet parts formed on both sides of the weight part, the magnet parts are formed relatively thinner than the weight part, and
the case main body has a weight rotating area that allows the weight part to rotate and a magnet rotating area that allows the magnet part to rotate and is formed to have a thinner bottom than a rotating area of the weight part, the magnet part is formed thin,
wherein a magnetic field detecting member is buried on the back side of the case main body of the magnet rotating area formed to have a thin bottom.

5. The tilt sensor according to claim 4, wherein a stepped surface formed by difference in thicknesses of the weight part and the magnet part is abutted against a stepped surface formed by difference in depth dimensions of the rotating area of the weight part and the rotating area of the magnet part to define an angle of rotation of the rotating member.

6. The tilt sensor according to claim 1, wherein the case main body is provided with an inner connecting terminal which connects a terminal of the magnetic field detecting member, and an outer connecting terminal which is connected to the inner connecting terminal is extended from the case main body.

7. The tilt sensor according to claim 1, wherein the case main body is formed of a case and a cover,
wherein a projection which is projected toward the interior space side of the case is disposed at the center of the cover.
